# EUROPÄISCHE PATENTSCHRIFT

(11) **EP 1 688 715 B1**
(45) Veröffentlichungstag und Bekanntmachung des Hinweises auf die Patenterteilung: **05.10.2011**
(21) Anmeldenummer: 06002456.9
(22) Anmeldetag: 07.02.2006
(51) Int. Cl.: G01F 15/00, G09F 3/03

(54) **Plombe zur Sicherung eines Energieverbrauchmessgeräts**
Lead to secure an energy usage measurement device
Plomb pour sécuriser un appareil de mesure de consommation d'énergie

(30) Priorität: 08.02.2005 DE 202005002048 U
(43) Veröffentlichungstag der Anmeldung: 09.08.2006
(73) Patentinhaber: ista International GmbH, 45131 Essen (DE)
(72) Erfinder: Adick, Jörn, 45259 Essen (DE)
(74) Vertreter: DR. STARK & PARTNER

(56) Entgegenhaltungen:
- EP-A1- 0 121 943
- DE-U1- 7 615 760
- GB-A- 2 274 871
- US-A- 4 993 260

## Beschreibung

Die Erfindung betrifft ein Energieverbrauchs-Messgerät gemäß Oberbegriff von Anspruch 1.

Aus der Praxis sind Plomben für solche Energieverbrauchs-Messgeräte bekannt, die zur Sicherung der Energieverbrauchs-Messgeräte vor Manipulation eingesetzt werden. Entsprechend der technischen Entwicklung sind derartige Messgeräte in immer stärkerem Maße als elektronische Messgeräte ausgebildet. Sie dienen als Grundlage für die verbrauchsabhängige Verteilung von Energiekosten, insbesondere Heizkosten, und können hierzu beispielsweise an einem Heizkörper zur Erfassung der verbrauchten Heizleistung angeordnet sein.

Um Manipulationen zwecks Verfälschung der Messergebnisse durch zeitweiliges Entfernen des Messgerätes von der Messstelle zu vermeiden, ist eine Plombe vorgesehen, die bei Manipulationsversuchen oder einer erfolgten Manipulation beschädigt, insbesondere zerstört wird (siehe z.B. DE 7615760 U1).

Derartige Plomben sind beispielsweise als eine kreisförmige, im sichtbaren Bereich befindliche Außenplatte mit darunter befindlichem, als Sollbruchstelle ausgebildetem Verbindungselement und daran angeordneten Feder- oder Rastelementen zum Hintergreifen von entsprechenden Vorsprüngen im Gehäuses des Messgerätes ausgebildet.

Nachteilig hierbei ist, dass die Sollbruchstelle von außen nicht sichtbar ist. Insoweit kann eine Manipulation nicht erkannt werden kann, wenn die Außenplatte nach erfolgter Manipulation mit Kleber an dem Verbindungselement befestigt wird. Sofern die Plombe zwecks Austausch des Messgerätes von einem entsprechend autorisierten Monteur erbrochen wird, kann dieser nicht feststellen, ob die Plombe bereits vorher einmal zerstört worden war.

Aufgabe der Erfindung ist es, die vorgenannten Nachteile zu vermeiden und ein Energieverbrauchs-Messgerät anzugeben, mit der ein Manipulationsversuch oder eine erfolgte Manipulation bereits vor Zerstören der Plombe zwecks Austausch des Messgerätes erkannt werden kann.

Diese Aufgabe wird gelöst durch ein gattungsgemäßes Energieverbrauchs-Messgerät mit einer gattungsgemäßen Plombe, wobei die Sollbruchstelle derart angeordnet ist, dass sie im montierten Zustand der Plombe bei in das Gehäuseinnere des Verbrauchszählers eingeführtem Teilelement sichtbar und auf ihren ordnungsgemäßen Zustand hin überprüfbar ist. Hierdurch kann der Monteur, wenn er die Plombe für den Austausch des Messgerätes erbrechen will, einen Manipulationsversuch oder aber eine erfolgte Manipulation leicht erkennen und hiervon die weitere Verfahrensweise auswählen. Eine "verschleierte" Manipulation ist somit sicher ausgeschlossen.

Dabei kann die Sollbruchstelle lediglich von außen sichtbar sein oder aber auch von außen erreichbar bzw. sogar außenseitig angeordnet sein, so dass auch eine taktile Prüfung der Unversehrtheit der Plombe möglich ist.

Vorzugsweise kann die Sollbruchstelle zumindest einen in einer Einkerbung angeordneten und die normale Oberfläche der Plombe fortsetzenden Steg aufweisen, so dass kein vorspringender Bereich, der bei einer Manipulation leicht angreifbar ist, vorhanden ist.

Erfindungsgemäß kann der Materialquerschnitt der Plombe im Bereich der Einkerbung mit einer hinterseitigen Materialschwächung versehen sein, so dass eine besonders empfindliche Sollbruchstelle gegeben ist.

Auch kann das Außenelement der Plombe flächenbündig eingelassen sein, und die Kantenbereiche des Außenelements der Plombe können insbesondere einen sich unterseitig bis unter das Außenelement der Plombe erstreckenden vorspringenden Kantenbereich des Messgerät-Gehäuses überdecken, so dass kein bei einer Manipulation leicht angreifbarer Bereich vorhanden ist.

Vorteilhafterweise ist zumindest ein als Teilabschnitt des Teilelements ausgebildeter weiterer seitlich federnder Vorsprung vorgesehen, der im in das Gehäuseinnere des Verbrauchszählers eingeführten Zustand mit dort entsprechend vorgesehenen Kontaktbereichen zusammenwirkend ein beschädigungsloses Entfernen der Plombe verhindert, und der die Plombe in der Montageposition vor Verlagerung in die Sicherungsposition gegen Entfernen sichert, so dass die Plombe schon bei der Fabrikation des Messgeräts an dem Gehäuse befestigt wird und somit als integraler Bestandteil des Gehäuses nicht verloren gehen kann.

Auch kann hierdurch das Gehäuseoberteil des Messgeräts mit darin angeordneter Messelektronik durch eine Zwischenwandung verschlossen und das Messgerät somit gegen Manipulation gesichert werden, so dass auch Manipulationen zwischen der Fabrikation und der Montage des Messgeräts vermieden oder aber zumindest erschwert werden.

Bei einem bevorzugten Ausführungsbeispiel kann die Plombe aus Kunststoff oder Metall bestehen, so dass auch komplizierte Formen bei guten Werkstoffwerten realisiert werden können.

Erfindungsgemäß kann der Vorsprung zwei entgegengesetzt in einer gemeinsamen Ebene liegende, voneinander abgewandt ausgerichtete und jeweils mit einem Hinterschnitt versehende federnde Rasthaken umfassen, so dass zum einen ein doppelte Sicherheit gegeben ist und zum anderen auch seitliche translatorische Verlagerungen nicht zu einer Lösung der Plombe führen können.

Weiterhin kann die Plombe zur Befestigung des Gehäuseoberteils eines zweigeteilten Energieverbrauchs-Messgeräts an dem Gehäuseunterteil mit wenigstens einem Haltevorsprung versehen sein, der in der Sicherungsposition der Plombe einen entsprechenden Haltebereich des Gehäuseunterteils hinterfasst, so dass kein zusätzliches Befestigungselement zur Anbringung des Gehäuseoberteils erforderlich ist und auch die Demontage beim Austausch des Messgeräts leicht durch Erbrechen der Plombe erfolgen kann.

Vorzugsweise ist eine solche vorstehend beschriebene Plombe bei einem Energieverbrauchs-Messgerät vorgesehen.

Dabei ist das Gehäuse des Energieverbrauchs-Messgeräts zweigeteilt mit einem Gehäuseoberteil und einem Gehäuseunterteil ausgebildet, wobei das Gehäuseoberteil oberseitig an dem Gehäuseunterteil eingehakt und unterseitig durch die Plombe gehalten ist, so dass eine leichte Befestigung des Gehäuseoberteils an dem Gehäuseunterteil bei gleichzeitiger zwangsläufiger Sicherung gegen Manipulation erfolgen kann.

Im Folgenden wird ein in der Zeichnung dargestelltes Ausführungsbeispiel der Erfindung erläutert. Es zeigen:
- Fig. 1: eine Frontansicht eines erfindungsgemäßen Energieverbrauchs-Messgeräts mit eingesetzter Plombe,
- Fig. 2: eine Ansicht der Innenseite des Gehäuseoberteils des zweigeteilt ausgebildeten Gegenstands nach Fig. 1 ohne eingesetzte Plombe,
- Fig. 3: eine Detailansicht der Innenseite des Gehäuseoberteils des zweigeteilt ausgebildeten Gegenstands nach Fig. 1 mit eingesetzter Plombe,
- Fig. 4: eine Ansicht schräg von oben auf eine erfindungsgemäße Plombe und

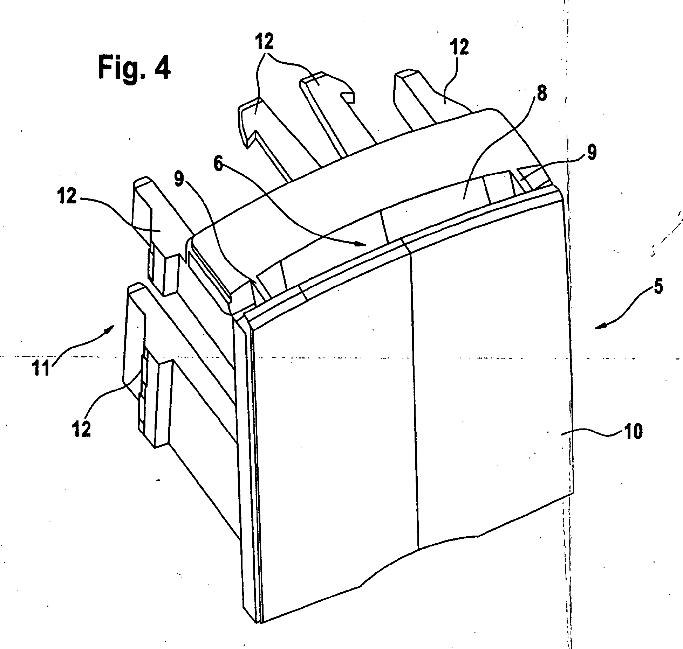

- Fig. 4: eine Ansicht schräg von unten einer erfindungsgemäßen Plombe.

In allen Figuren werden für gleiche bzw. gleichartige Bauteile übereinstimmende Bezugszeichen verwendet.

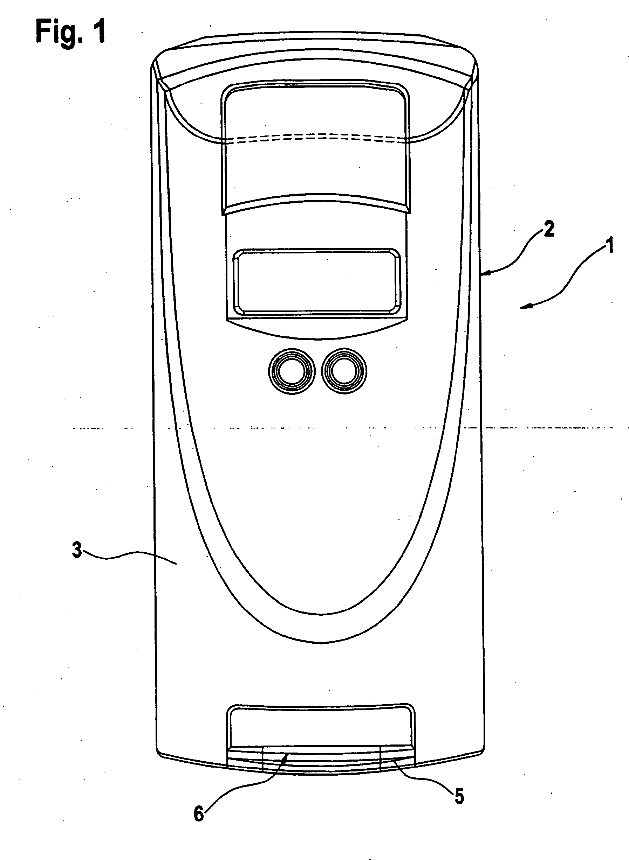

Fig. 1 zeigt ein als insbesondere Heizkostenverteiler ausgebildetes Energieverbrauchs-Messgerät 1, wobei das Gehäuse 2 des Energieverbrauchs-Messgeräts 1 zweigeteilt mit einem Gehäuseoberteil 3 und einem in dieser Ansicht nicht dargestellten Gehäuseunterteil 4 ausgebildet ist. Das Gehäuseoberteil 3 ist dabei oberseitig an dem Gehäuseunterteil 4 eingehakt und wird unterseitig durch eine Plombe 5 gehalten.

Die Plombe 5 ist mit einer Sollbruchstelle 6 derart versehen, dass die Sollbruchstelle 6 im montierten Zustand der Plombe 5 bei in das Gehäuseinnere des Energieverbrauchs-Messgeräts 1 eingeführtem Teilelement der Plombe 5 sichtbar und auf ihren ordnungsgemäßen Zustand hin überprüfbar ist. Hierdurch kann der Monteur, wenn er die Plombe 5 für den Austausch des Energieverbrauchs-Messgeräts 1 erbrechen will, einen Manipulationsversuch oder aber eine erfolgte Manipulation leicht erkennen und hiervon die weitere Verfahrensweise auswählen, so dass eine unentdeckte Manipulation somit sicher ausgeschlossen ist.

Die Plombe ist flächenbündig in das Gehäuseoberteil 3 eingelassen, wobei die Kantenbereiche der Plombe 5 einen sich unterseitig erstreckenden vorspringenden und durch die ebenfalls mehrstufig ausgebildeten Kanten des Gehäuseoberteils 3 überdeckten Kantenbereich aufweisen, so dass kein bei einer Manipulation leicht angreifbarer Bereich vorhanden ist.

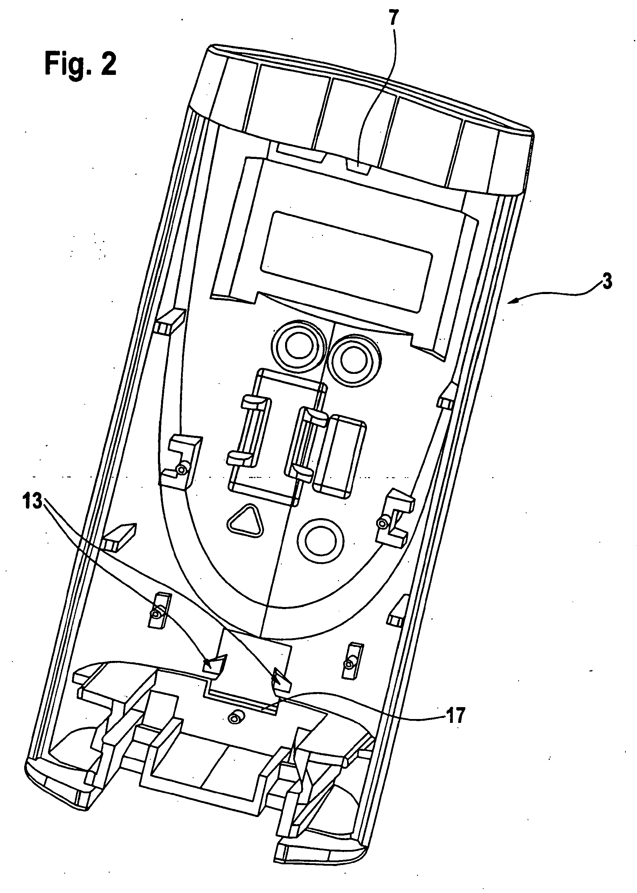

Wie aus Fig. 2 ersichtlich, weist das Gehäuseoberteil 3 zum oberseitigen Einhaken am Gehäuseunterteil 4 wenigstens einen Haltevorsprung 7 auf, der mit einer entsprechenden Ausgestaltung des Gehäuseunterteils 4 zusammenwirkend die oberseitige Befestigung der beiden Gehäusehälften aneinander bewirkt.

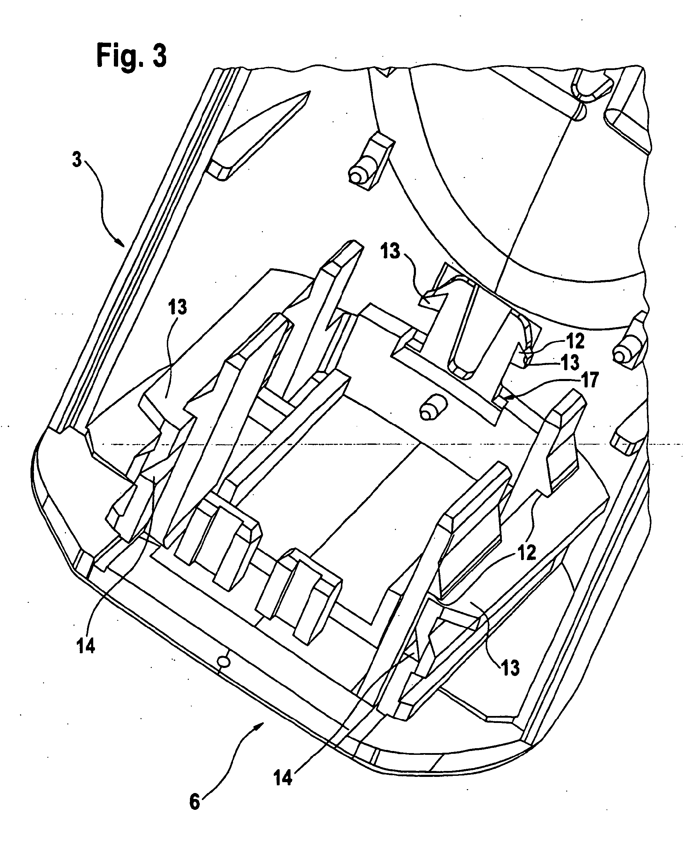

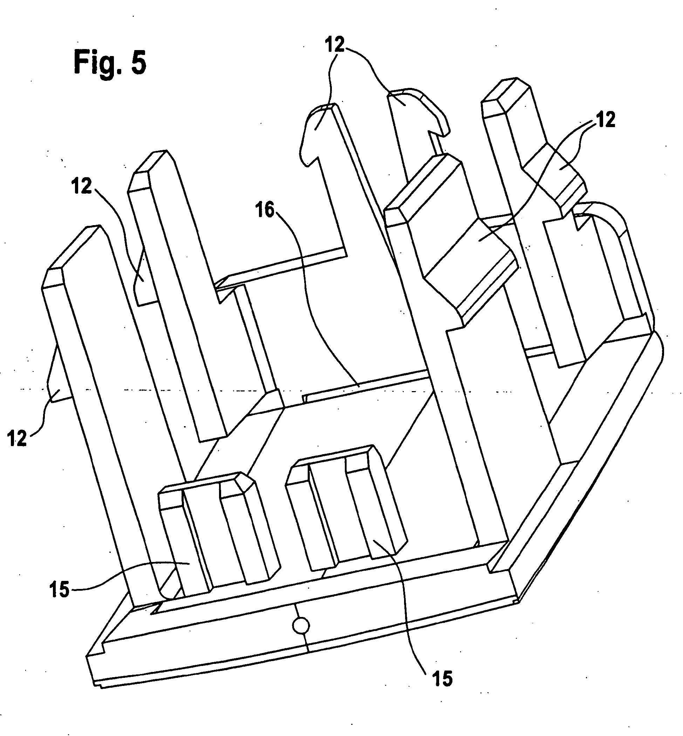

Fig. 3 zeigt die mit der Plombe 5 zusammenwirkende Ausgestaltung der Innenseite des Gehäuseunterteils 4 im Detail und die Fig. 4 und 5 zeigen die Plombe 5.

Die Sollbruchstelle 6 der Plombe 5 weist außenseitig eine Einkerbung 8 auf, in der zwei jeweils im randseitigen Bereich angeordnete und die normale Oberfläche der Plombe 5 fortsetzende Stege 9 vorgesehen sind. Somit wird ein vorspringender Bereich, der bei einer Manipulation leicht angreifbar ist, vermieden, und die Stege 9, die bei einem Manipulationsversuch aufgrund ihrer geringen Materialstärke als erstes Schaden nehmen und insoweit schnell reißen, lassen eine versuchte oder sogar erfolgte Manipulation gut erkennen.

Hierzu kann der Materialquerschnitt der Plombe 5 im Bereich der Einkerbung 8 mit einer hinterseitigen Materialschwächung 16 versehen sein, so dass eine besonders empfindliche Sollbruchstelle 6 gegeben ist.

Weiterhin weist die Plombe 5 ein im montierten Zustand sichtbares Außenelement 10 und ein im montierten Zustand in das Gehäuseinnere des Energieverbrauchs-Messgeräts 1 zumindest teilweise hineinragendes Teilelement 11 auf. Das Teilelement 11 ist mit mehreren entgegen der Vorsprungsrichtung federnden Vorsprüngen 12 versehen, die im in das Gehäuseinnere des Energieverbrauchs-Messgeräts 1 eingeführten Zustand in der Sicherungsposition der Plombe 5 mit dort entsprechend vorgesehenen Kontaktbereichen 13 des Energieverbrauchs-Messgeräts 1 zusammenwirkend ein beschädigungsloses Entfernen der Plombe 5 verhindern. Die Sollbruchstelle 6 ist dabei zwischen dem von außen sichtbaren Bereich des Teilelements 11 und dem Außenelement 10 vorgesehen.

Weiterhin ist bei einigen Vorsprüngen 12 jeweils ein zusätzlicher, in Einschubrichtung der Plombe 5 dem die Plombe 5 in der Sicherungsposition verriegelnden Kontaktbereich 13 vorgelagerter weiterer Kontaktbereich 14 vorgesehen, der im in das Gehäuseinnere des Energieverbrauchs-Messgeräts 1 lediglich teilweise eingeführten Zustand mit dem jeweiligen Vorsprung 12 zusammenwirkend die Plombe 5 in der Montageposition bei noch nicht erfolgter Verlagerung der Plombe 5 in die Sicherungsposition gegen Entfernen sichert.

Erfindungsgemäß ist ein Teilabschnitt des Teilelements 11 als ein weiterer seitlich federnder Vorsprung 12 ausgebildet, der im in das Gehäuseinnere des Energieverbrauchs-Messgeräts 1 lediglich teilweise eingeführten Zustand mit dem Kontaktbereich 13 zusammenwirkend die Plombe 5 in der Montageposition bei noch nicht erfolgter Verlagerung der Plombe 5 in die Sicherungsposition gegen Entfernen sichert.

Somit kann die Plombe 5 schon bei der Fabrikation des Energieverbrauchs-Messgeräts 1 an dem Gehäuse 2 befestigt werden, so dass sie somit als integraler Bestandteil des Gehäuses 1 nicht verloren gehen kann.

Auch kann hierdurch das Gehäuseoberteil 3 des Energieverbrauchs-Messgeräts 1 mit darin angeordneter Messelektronik durch eine Zwischenwandung verschlossen und das Energieverbrauchs-Messgeräts 1 somit gegen Manipulation gesichert werden, so dass auch Manipulationen zwischen der Fabrikation und der Montage des Energieverbrauchs-Messgeräts 1 vermieden oder aber zumindest erschwert werden.

Bei einem bevorzugten Ausführungsbeispiel kann die Plombe 5 aus Kunststoff oder Metall bestehen, so dass auch komplizierte Formen bei guten Werkstoffwerten realisiert werden können.

Im dargestellten Ausführungsbeispiel sind jeweils zwei Vorsprünge 12 entgegengesetzt in einer gemeinsamen Ebene liegend und voneinander abgewandt ausgerichtet jeweils als mit einem widerhakenähnlich schräg verlaufenden Hinterschnitt versehende Rasthaken ausgebildet, so dass zum einen ein doppelte Sicherheit gegeben ist und zum anderen auch seitliche translatorische Verlagerungen nicht zu einem Lösen der Plombe 5 führen können. Diese Rasthaken werden beim Einführen durch den Schlitz 17 des Gehäuseoberteils 3 durchgeführt und liegen in ihrer verriegelten Position an den entsprechend schräg ausgebildeten Kontaktbereichen 13 an.

Ferner ist die Plombe 5 zur Befestigung des Gehäuseoberteils 3 an dem Gehäuseunterteil 4 mit zwei Verriegelungsvorsprüngen 15 versehen, die in der Sicherungsposition der Plombe 5 einen entsprechenden Haltebereich 16 des Gehäuseunterteils 4 hinterfassen, so dass kein zusätzliches Befestigungselement zur Anbringung des Gehäuseoberteils 3 erforderlich ist und auch die Demontage beim Austausch des Energieverbrauchs-Messgeräts 1 leicht durch Erbrechen der Plombe 5 erfolgen kann.

## Patentansprüche

1. Energieverbrauche-Mesagerät (1), wobei das Gehäuse (2) des Energieverbrauchs-Messgeräts (1) zweigeteilt mit einem Gehäuseoberteil (3) und einem Gehäuseunterteil (4) ausgebildet ist, und wobei das Gehäuseoberteil (3) oberseitig an dem Gehäuseunterteil (4) eingehakt und unterseitig durch eine Plombe (5) gehalten ist, wobei die Plombe (5) zur Sicherung des Energieverbrauohs-Messgeräts (1), insbesondere Heizkostenverteilers, gegen Manipulation, vorgesehen ist und ein im montierten Zustand sichtbares Außenelement (10) und ein im montierten Zustand in das Gehäuseinnere des Verbxauchszählers zumindest teilweise hineinragendes Teilelement (11) aufweist, wobei das Teilelement (11) mit wenigstens einem seitlich federnden Vorsprung (12) versehen ist, der im in das Gehäuseinnere des Verbrauchszählers eingeführten Zustand in der Sicherungsposition der Plombe (5), d. h. bei im in das Gehäuseinnere des Energieverbrauchs-Messgeräts (1) eingeführten Zustand der Plombe (5), mit dort entsprechend vorgesehenen Kontaktbereichen (13) des Energieverbrauchs-Messgeräts (1) zusammenwirkend ein beschädigungsloses Entfernen der Plombe (5) verhindert, und wobei zwischen Teilelement (11) und Außenelement (10), insbesondere zwischen Vorsprung (12) des Teilelemente (11) und Außenelement (10), eine bei Entfernen der Plombe (5) versagende Sollbruchstelle (6) vorgesehen ist, **dadurch gekennzeichnet, dass** die Sollbruchstelle (6) derart angeordnet ist, dass sie im montierten Zustand der Plombe (5) bei in das Gehäuseinnere des Verbrauchszählers eingeführte Teilelement (11) sichtbar und auf ihren ordnungsgemäßen Zustand hin überprüfbar ist, wobei zumindest ein als Teilabschnitt des Teilelements (11) ausgebildeter weiterer seitlich federnder Vorsprung (12) vorgesehen ist, der im in das Gehäuseinnere des Verbrauchszählers eingeführten Zustand mit dort entsprechend vorgesehenen Kontaktbereichen (13) zusammenwirkend ein beschädigungsloses Entfernen der Plombe (5) verhindert, und der die Plombe (5) in der Montageposition, d. h. bei im in das Gehäuseinnere des Energieverbrauchs-Messgeräts (1) lediglich teilweise eingeführten Zustand der Plombe (5) und noch nicht erfolgter Verlagerung der Plombe (5) in die Sieherungsposition, vor Verlagerung in die Sicherungsposition gegen Entfernen sichert.

2. Energieverbrauchs-Messgerät (1) nach Anspruch 1, **dadurch gekennzeichnet, dass** die Sollbruchstelle (6) der Plombe (5) zumindest einen in einer Einkerbung (8) angeordneten und die normale Oberfläche der Plombe (5) fortsetzenden Steg (9) aufweiset.

3. Energieverbrauchs-Messgerät (1) nach Anspruch 2, **dadurch gekennzeichnet, dass** der Materialquerschnitt der Plombe (5) im Bereich der Einkerbung (8) mit einer hinterseitigen Materialschwächung (16) versehen ist.

4. Energieverbrauchs-Messgerät (1) nach einem der vorhergehenden Ansprüche, **dadurch gekennzeichnet, dass** das Außenelement (10) der Plombe (5) flächenbündig eingelassen ist.

5. Energieverbrauchs-Messgerät (1) nach einem der vorhergehenden Ansprüche, **dadurch gekennzeichnet, dass** die Kantenbereiche des Außenelements (10) einen sich unterseitig bis unter das Außenelement (10) der Plombe (5) erstreckenden vorspringenden Kantenbereich des Messgerät-Gehäuses (2) überdecken.

6. Energieverbrauchs-Messgerät (1) nach einem der vorhergehenden Ansprüche, **dadurch gekennzeichnet, dass** die Plombe (5) aus Kunststoff oder Metall besteht.

7. Energieverbrauchs-Messgerät (1) nach einem der vorhergehenden Ansprüche, **dadurch gekennzeichnet, dass** der Vorsprung (12) der Plombe (5) zwei entgegengesetzt in einer gemeinsamen Ebene liegende, voneinander abgewandt ausgerichtete und jeweils mit einem Hinterschnitt versehende federnde Rasthaken umfasst.

8. Energieverbrauchs-Messgerät (1) nach einem der vorhergehenden Ansprüche, **dadurch gekennzeichnet, dass** die Plombe (5) zur Befestigung des Gehäuseoberteils (3) eines zweigeteilten Energieverbrauchs-Messgeräts (1) an dem Gehäuseunterteil (4) mit wenigstens einem Haltevorsprung (7) versehen ist, der in der Sicherungsposition der Plombe (5) einen entsprechenden Haltebereich des Gehäuseunterteils (4) hinterfasst.

## Claims

1. Energy consumption measurement device (1) wherein the housing (2) of the energy consumption measurement device (1) is designed in two parts with a housing upper part (3) and a housing lower part (4) and wherein the housing upper part (3) is hooked into the top of the housing lower part (4) and held at the underside by a seal (5), wherein the seal (5) is provided for securing the energy consumption measurement device (1), in particular the heating cost distributor, against manipulation and has an outer element (10) visible in the fitted state and a sub-element (11) which, in the fitted state, at least partly projects into the interior of the housing of the consumption meter, wherein the sub-element (11) is provided with at least one laterally sprung projection (12) preventing, when inserted into the interior of the housing of the consumption meter in the securing position of the seal (5), i.e. with the seal (5) inserted into the interior of the housing of the energy consumption measuring device (1), interacting with contact areas (13) of the energy consumption measurement device (1) correspondingly provided there, a damage-free removal of the seal (5), and wherein, between sub-element (11) and outer element (10), in particular between projection (12) of the sub-element (11) and outer element (10), a failing preferred break point (6) when removing the seal (5) is provided, **characterised in that** the preferred break point (6) is arranged such that, in the fitted state of the seal (5), with the sub-element (11) inserted into the interior of the housing of the consumption meter, it is visible and verifiable for its proper condition, wherein at least one further laterally sprung projection (12) designed as a sub-section of the sub-element (11) is provided which, when inserted into the interior of the housing of the consumption meter, interacting with contact areas (13) correspondingly provided there, prevents a damage-free removal of the seal (5), and which secures the seal (5) in the fitted position against removal, i.e. with the seal (5) only partly inserted into the interior of the housing of the energy consumption measurement device (1) and the seal (5) not yet moved to the securing position, prior to moving to the securing position.

2. Energy consumption measurement device (1) according to claim 1, **characterised in that** the preferred break point (6) of the seal (5) has at least one web (9) arranged in a notch (8) and continuing the normal surface of the seal (5).

3. Energy consumption measurement device (1) according to claim 2, **characterised in that** the material cross-section of the seal (5) in the area of the notch (8) is provided with a weakening of the material (16) at the rear.

4. Energy consumption measurement device (1) according to one of the preceding claims, **characterised in that** the outer element (10) of the seal (5) is flush-mounted.

5. Energy consumption measurement device (1) according to one of the preceding claims, **characterised in that** the edge areas of the outer element (10) cover up a projecting edge area of the measurement device housing (2) which extends on the underside until below the outer element (10) of the seal (5).

6. Energy consumption measurement device (1) according to one of the preceding claims, **characterised in that** the seal (5) is made of plastic or metal.

7. Energy consumption measurement device (1) according to one of the preceding claims, **characterised in that** the projection (12) of the seal (5) comprises two opposing spring-loaded latching hooks lying in a common plane, oriented so as to point away from one another and each provided with an undercut.

8. Energy consumption measurement device (1) according to one of the preceding claims, **characterised in that** the seal (5) for attaching the housing upper part (3) of a two-part energy consumption measurement device (1) is provided with at least one holding projection (7) at the housing lower part (4) which engages, in the securing position of the seal (5), a corresponding holding area of the housing lower part (4).

## Revendications

1. Appareil (1) de mesure de consommation d'énergie, sachant que le boîtier (2) de l'appareil (1) de mesure de consommation d'énergie est réalisé en deux parties avec une partie supérieure (3) de boîtier et une partie inférieure (4) de boîtier, et sachant que la partie supérieure (3) de boîtier est accrochée sur le dessus à la partie inférieure (4) de boîtier et est maintenue sur le dessous par un plomb (5), sachant que le plomb (5) est prévu pour sécuriser à l'encontre des manipulations l'appareil (1) de mesure de consommation d'énergie, en particulier un répartiteur de frais de chauffage, et présente un élément extérieur (10) visible dans l'état monté et un élément partiel (11) qui, dans l'état monté, pénètre au moins partiellement à l'intérieur du boîtier du compteur d'énergie, sachant que l'élément partiel (11) est pourvu d'au moins une saillie (12) latéralement élastique qui, dans l'état introduit à l'intérieur du boîtier du compteur d'énergie, dans la position de sécurité du plomb (5) - c'est-à-dire lorsque le plomb (5) se trouve dans l'état introduit à l'intérieur du boîtier de l'appareil (1) de mesure de consommation d'énergie -, en coopérant avec des zones de contact (13) de l'appareil (1) de mesure de consommation d'énergie qui y sont prévues en correspondance, empêche le plomb (5) d'être retiré sans l'endommager, et sachant qu'un point de rupture privilégiée (6), qui se rompt lorsqu'on retire le plomb (5), est prévu entre l'élément partiel (11) et l'élément extérieur (10), en particulier entre la saillie (12) de l'élément partiel (11) et l'élément extérieur (10), **caractérisé en ce que** le point de rupture privilégiée (6) est disposé de telle sorte que, dans l'état monté du plomb (5), lorsque l'élément partiel (11) est introduit à l'intérieur du boîtier du compteur de consommation, il est visible et son état correct peut être contrôlé, sachant qu'il est prévu au moins une saillie supplémentaire (12) latéralement élastique, réalisée sous forme de tronçon de l'élément partiel (11), laquelle, dans l'état introduit à l'intérieur du boîtier du compteur de consommation, en coopérant avec des zones de contact (13) qui y sont prévues en correspondance, empêche le plomb (5) d'être retiré sans l'endommager, et laquelle, dans la position de montagne - c'est-à-dire lorsque le plomb (5) se trouve seulement partiellement introduit à l'intérieur du boîtier de l'appareil (1) de mesure de consommation d'énergie et n'a pas encore été déplacé dans la position de sécurité -, empêche le plomb (5) d'être retiré avant d'être déplacé dans la position de sécurité.

2. Appareil (1) de mesure de consommation d'énergie selon la revendication 1, **caractérisé en ce que** le point de rupture privilégiée (6) du plomb (5) présente au moins une branche (9) prolongeant la surface normale du plomb (5) et disposée dans une encoche (8).

3. Appareil (1) de mesure de consommation d'énergie selon la revendication 2, **caractérisé en ce que** la section du matériau du plomb (5) est dotée, dans la région de l'encoche (8), d'un affaiblissement de matière (16) sur le côté arrière.

4. Appareil (1) de mesure de consommation d'énergie selon l'une des revendications précédentes, **caractérisé en ce que** l'élément extérieur (10) du plomb (5) est encastré à fleur de surface.

5. Appareil (1) de mesure de consommation d'énergie selon l'une des revendications précédentes, **caractérisé en ce que** les régions de bord de l'élément extérieur (10) recouvrent une région de bord du boîtier (2) de l'appareil de mesure qui fait saillie en s'étendant sur le dessous jusqu'en dessous de l'élément extérieur (10) du plomb (5).

6. Appareil (1) de mesure de consommation d'énergie selon l'une des revendications précédentes, **caractérisé en ce que** le plomb (5) est réalisé en matière plastique ou en métal.

7. Appareil (1) de mesure de consommation d'énergie selon l'une des revendications précédentes, **caractérisé en ce que** la saillie (12) du plomb (5) comprend deux crochets d'enclenchement élastiques situés dans un plan commun, orientés en opposition mutuelle et pourvus chacun d'une contre-dépouille.

8. Appareil (1) de mesure de consommation d'énergie selon l'une des revendications précédentes, **caractérisé en ce que** le plomb (5) est pourvu, pour la fixation de la partie supérieure (3) de boîtier d'un appareil (1) de mesure de consommation d'énergie en deux parties sur la partie inférieure (4) de boîtier, d'au moins une saillie de maintien (7) qui, dans la position de sécurité du plomb (5), s'engage derrière une région de maintien correspondante de la partie inférieure (4) de boîtier.
